# Europäisches Patentamt

## European Patent Office

## Office européen des brevets

(19)

(11) Publication number: **0 106 009**
**B1**

(12)

# EUROPEAN PATENT SPECIFICATION

(45) Date of publication of patent specification: **28.01.87**

(51) Int. Cl.⁴: **G 01 N 30/32**

(21) Application number: **83101996.3**

(22) Date of filing: **01.03.83**

(54) Liquid chromatograph.

(30) Priority: **29.06.82 JP 98345/82 u**

(43) Date of publication of application:
**25.04.84 Bulletin 84/17**

(45) Publication of the grant of the patent:
**28.01.87 Bulletin 87/05**

(84) Designated Contracting States:
**DE FR GB**

(56) References cited:
**DE-B-2 508 572**
**-GB-A-2 039 091**
**US-A-3 855 129**
**US-A-3 917 531**

(73) Proprietor: **SHIMADZU CORPORATION**
**378, Ichinofunairi-cho Kawaramachi-dori Nijo Sagaru**
**Nakagyo-ku Kyoto 604 (JP)**

(72) Inventor: **Nakamoto, Akira**
**6 Toh, 105 Go 15-18, Tsukahara 1-chome**
**Takatsuki-shi Osaka, 569 (JP)**
Inventor: **Saito, Katsuhiko**
**31-12, Seta 3-chome**
**Otsu-shi Shiga-ken, 520-21 (JP)**

(74) Representative: **Modiano, Guido et al**
**MODIANO, JOSIF, PISANTY & STAUB Modiano & Associati Baaderstrasse 3**
**D-8000 München 5 (DE)**

Courier Press, Leamington Spa, England.

EP 0 106 009 B1

## Description

The present invention relates to a solvent delivery device for liquid chromatography and, more particularly, to such a device which delivers solvent to a liquid chromatography column using a plunger pump.

2. Description of the prior art

Although conventional plunger pumps for solvent delivery devices for use in liquid chromatography are available in various kinds, that is, reciprocating single plunger pump, double plunger pump and triple plunger pump, compressibility of solvent at higher pressure has required to compensate for the change in flow rate due to solvent compression, irrespective of the kind of plunger pump used. Specifically, a compensating rate at a certain pressure corresponding to the compressibility of a solvent used is determined first, then the compensating rate is changed in proportion to the pressure so that liquid compressibility may be a linear function of pressure. In this method, the plunger speed at a certain flow rate can be given by

$$Ve' = Ve + KPVe$$

where $Ve'$ is a plunger speed at a certain pressure P; $Ve$ is a plunger speed at $P=O$; K is a compensating coefficient for a specific solvent. In the above formula, $KPVe$ is a compensating plunger speed corresponding to the compensating flow rate at a certain pressure P.

Such a flow rate compensation has required that the compensating quantity be manually adjusted whenever another solvent having a different compressibility is used.

Also, in this prior art method, the velocity at which the plunger is moved for delivery is uniformly speeded up in accordance with the increase of the pressure in the plunger pump. However, such speed up of the velocity is sometimes insufficient, while the quantity of solvent compressed in the pump chamber is also increased with the increase of the pressure. Therefore, this prior art method causes to take much time for compression of solvent, delays the operation of the outlet check valve of the pump and then increases the pulsation of the solvent delivered.

Known from the United States Patent No. 3855129 is a compact pumping system especially useful in liquid chromatography which includes, a pump adapted to provide a substantially pulse-free flow, and a circuit for controlling a stepping motor which is designed so that the current applied to the motor is only that required to pump the liquid, to avoid heat associated with a great current.

Also known from United States Patent No. 3917531 is an apparatus for accurately pumping a chromatograph liquid stream including a pump, the output of which is taken through a flow transducer for providing flow feedback signals to control circuits driving the pump actuator and thereby eliminate undesired flow rate variations.

However, the constructions of these prior devices comprise basically to connect two plunger pumps in parallel between a solvent reservoir and a solvent supply passage, to reciprocally interlock each plunger of these pumps and to combine solvents delivered from the two plunger pumps, thereby the pulsation due to reciprocating the plungers being prevented, and further speed of the plungers being controlled in response to a feedback signal which is output corresponding to pressure variation of the solvent combined or each solvent.

Resultantly, also in the constructions of these prior devices, in response to an increase in pressure, the quantity of solvent compressed in the pump chamber is increased and then the operation of the outlet check valve of the pump is delayed. Therefore they do not solve the problem of increase in the pulsation of the solvent.

Another disadvantage of the prior devices is that when large pressure increases are encountered in micro-bore columns, the time during which the delivery flow is accompanied by pulsation cannot be shortened. A further disadvantage of prior devices is that if air bubbles enter the pump chamber while the plunger is being retracted and when air bubbles are generated in the chamber, the bubbles cannot readily escape therefrom, especially at a low flow rate range.

Accordingly it is an aim of the present invention to overcome the drawbacks of prior devices by providing a liquid chromatograph which can effectively reduce pulsation at all times, even at low-flow rates and within a wide pressure range.

Within the above aim, it is an object of the invention to provide a liquid chromatograph which can shorten the time during which the delivery flow is accompanied by pulsation upon large pressure increases being encountered in microbore columns.

A further object of the invention is to provide a liquid chromatograph wherein any air bubbles present in the pump chamber, are rapidly compressed and can very readily escape therefrom, even when the plunger moves at very low velocities.

This aim, and these and other objects which will become apparent hereinafter are achieved by a liquid chromatograph according to the present invention, which comprises:

a reciprocating single plunger pump (2) having a pair of check valves (3, 14) respectively, disposed on the outlet and inlet sides of the pump (2);

a solvent supply passage (8) through which solvent is supplied, from the outlet check valve (3) of the pump (2) to a column (7);

a driver means (10, 18, 19, 20) for causing the plunger (9) of the pump (2) to move for delivering solvent and to move faster for sucking solvent, and

a control means (11) for controlling the velocity of the plunger (9) at which the plunger (9) is moved for the delivery or suction:

the control means comprising a detecting means (4) disposed in the solvent supply passage (8) for providing a signal corresponding to a physical parameter of the solvent, a means (4, 21, 24)·for providing a reference signal at a predetermined point of the pump cycle, and a comparator means (23) for comparing the reference signal with a signal indicating the parameter which is derived from the detecting means (4);

the signal produced from the comparator means (23) allowing the velocity at which the plunger (9) is moved to be controlled, characterized in that it further comprises:

pressure detecting means as said detecting means,

memory means (22), adapted for storing a pressure signal $(P_2)$ obtained from the pressure detecting means (4) at said predetermined point $(T_2)$ at which the suction is terminated and being associated with said comparator means (23) for comparing the stored pressure signal $(P_2)$ with a signal indicating a pressure which is derived from said pressure detecting means (4); and

means (25) for controlling in response to the signal produced from the comparator means (23), the velocity at which the plunger (9) is moved for delivery from the initiation of delivery stroke until the outlet pressure of the pump (2) reaches again the pressure as stored at the predetermined point, so that the above velocity is greater than a velocity of the plunger (9) set for the subsequent movement for delivery.

That is, the chromatograph according to the invention has a control means exerting control over the velocity of the plunger of the reciprocating single plunger pump when it is moved for delivering solvent so that the velocity of the plunger immediately after the initiation of the delivery is made larger than the velocity set for the subsequent delivery until the pressure in the solvent supply passage reaches the pressure at a predetermined point.

Further features and advantages of the invention, will be apparent from the following detailed description thereof, and the accompanying illustrative, non-limitative drawings wherein:

Fig. 1 illustrates the function of one example of solvent supply device for liquid chromatography according to the present invention;

Fig. 2 is a cross-sectional view of the outlet check valve of the device shown in Fig. 1;

Fig. 3 illustrates the control means of the device shown in Fig. 1;

Fig. 4 is a graph showing the relationship between the pressure at the outlet of a pump and time;

Fig. 5 is a graph showing the relationship between the velocity of the pump and time;

Fig. 6 is a graph showing the relationship betwen the pressure within the pump chamber and time;

Fig. 7 is a graph showing the relationship among the pressure at the outlet of the pump, flow rate and time when the flow rate delivered by the pump is set to 10 µl/min.

One preferred embodiment of the present invention is described in detail hereinafter with reference to the accompanying drawings. It is to be understood that the invention is not limited to the embodiment since various changes and modifications may be made thereto without departing from the spirit and scope of the invention.

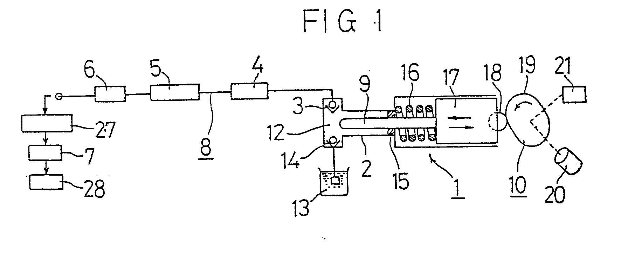

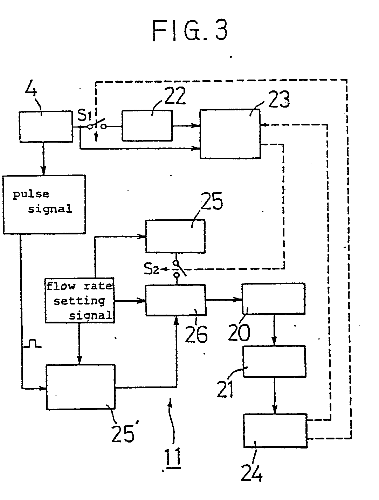

Referring first to Figs. 1-3, there is shown a solvent delivery device 1 for use in high-speed liquid chromatography. The device 1 is comprised of a reciprocating single plunger pump 2 having an outlet check valve 3 a solvent supply passage 8 extending from the valve 3 of the pump for supplying solvent to a column 7 through a pressure sensor 4 disposed at the outlet of the pump, a small capacity damper 5, and a filter 6, a driver means 10 for causing the plunger 9 in the pump 2 to move for delivery and to move faster for suction, and a control means 11 for controlling the velocity of the plunger 9 when it is moved for delivery.

When the pump 2 retracts its plunger 9, solvent is sucked into its pump chamber 12 from a solvent reservoir 13 through an inlet check valve 14. On the other hand, when the pump 2 advances the plunger, solvent in the chamber 12 is delivered into the solvent supply passage 8 through the aforementioned outlet check valve 3. The pump further includes a plunger sseal 15, a coil spring 16, a plunger holder 17 and a bearing 18.

The means 10 for driving the plunger comprises a special cam 19, which is rotated by a stepping motor 20 and its curved periphery is pressed into contact with the bearing 18. The cam 19 is a conventional cam and imparts a linear movement accompanying velocity change to the bearing. The rotational position of.the cam 19, that is the position of the plunger 9, is detected by a photosensor 21.

The control means 11 comprises said pressure sensor 4, a memory circuit 22 for storing signals indicating the pressures at the outlet of the pump at the terminations of every period of the delivery and suction strokes for the plunger, a comparator circuit 23 for comparing the stored signals with the signal derived from the sensor 4 and indicating a pressure, a plunger position monitor 24 for detecting the position of the plunger by means of the photo-sensor 21 to monitor the position, specific valve setting circuits 25 and 25′ for setting the specific valves according to the flow rate, a pulse generator circuit 26, switches $S_1$ and $S_2$, other various signal transmitting circuits (not shown), etc.

In addition, the solvent delivery device 1 includes an injector 27 and a LC detonator 28, as for example an ultraviolet-visible spectrophotometer.

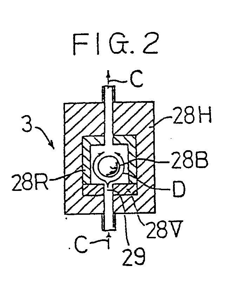

Referring specifically to Fig. 2, the check valve 3 has a ball 28B, a housing 28H, a valve chest 28R, a valve seat 28V and an opening 29.

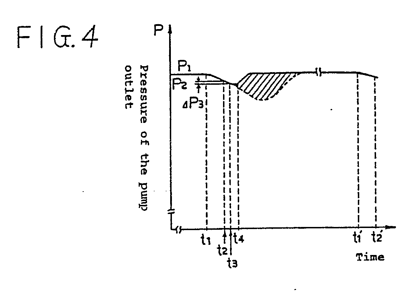

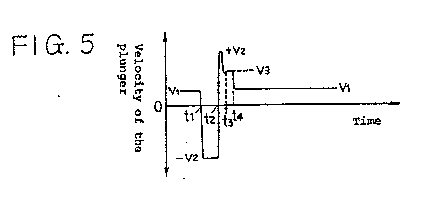

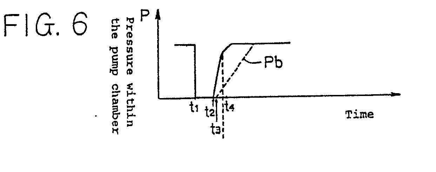

The principal operation of the solvent delivery device 1 constructed as described above is now described. Referring next to Figs. 1—6, when a solvent, such as methanol, acting as a mobile phase, is rapidly sucked by the plunger moving at its maximum velocity, $-V_2$, the outlet pressure P of the pump slightly decreases from pressure $P_1$ at the beginning of suction $t_1$ to pressure $P_2$ at the ending of suction $t_2$ due to the rapid suction and the action of the damper. During this process, the photo-sensor 21 disposed in association with the cam 19 detects the reference position of the plunger, and then the monitor 24 counts the number of pulses fed to the stepping motor 20 to continuously monitor the position of the plunger. The ending point of the suction $t_2$ is indicated by the monitor 24, which momentarily closes the switch $S_1$ at this instant. Thus, the signal indicative of the pressure $P_2$ and derived from the sensor 4 is stored in the memory circuit 22. At the same time, the setting circuit 25' causes the plunger 9 to be advanced at the same velocity $V_2$ as in the rapid suction during a pulse width period proportional to the pressure $P_2$, that is, from $t_2$ to $t_3$. This pulse width is set for the solvent having the lowest compressibility among the mobile phases used in liquid chromatography. This assures that solvent in the pump chamber is smoothly compressed when a delivery process is initiated. In a situation where a solvent having a large compressibility like methanol is used, the pressure in the pump chamber will not reach the stored pressure $P_2$ in that pulse width time and so the outlet check valve 3 of the pump will not open yet. Therefore, the outlet pressure of the pump P⁻ decreases further to a value satisfying the relation

$$P_2 - P = \triangle P_3 \geqq 0.5 \text{ Kg/cm}^2$$

at $t_3$ and $P = P_3$, when the comparator circuit 23 causes the switch $S_2$ to close. Then, the setting circuit 25 drives the plunger 9 so that it moves at a velocity $V_3$ which is lower than the maximum velocity for the rapid suction and higher than the velocity set for delivery flow rate. As a result, the compression of solvent in the pump chamber 12 is accelerated and the pressure P reaches the pressure $P_2$, when $(t_4)$ the comparator circuit 23 causes the switch $S_2$ to open. Then the velocity is returned to the original value $V_1$, corresponding to the set delivering flow rate. These rapid suction and characteristic delivery operations are continuously repeated. It should be noted that if the resolution of the pressure sensor permits, the value of the right side of the above formula may be lower than 0.5 Kg/cm².

Next, the operation of the check valve 3 at the outlet as shown in Fig. 2 is described for reference. The valve chest 28R and the valve seat 28V are installed in the housing 28H, and when solvent is delivered, the stream of the solvent C in the direction of arrow D keeps the ball 28B apart from the seat 28V. Then, when the pump 2 turns from the delivery state to a suction state, the plunger is rapidly retracted in a time of about 0.15 second, whereby the small amount of solvent C moves fast in reverse. The result is that the ball 28B rapidly closes opening 29 of the seat 28V under the action of the viscosity of the solvent.

As described thus far, since the solvent delivery device 1 detects the pressure at the pump outlet and controls the velocity of the plunger in response thereto, no manually compressibility compensation is required. Further, as the compression of the solvent in the pump chamber is carried out rapidly, flow pulsation decreases.

It is to be noted that the aforementioned velocity $V_3$ of the plunger for compression of the solvent is changed according to the set flow rate for the following reason. Although it is preferred that the velocity $V_3$ assumes a greater value, if it is set to an excessively large value, then the difference between the velocities $V_3$ and $V_1$ becomes too great in a case of a low flow rate, for example several tens of µl/min., with the result that the motor speed cannot immediately return to the original value at point $t_4$, producing an overshoot. This makes the compensating quantity great and sometimes rather renders the flow rate too great. In particular, if the flow rate is set to 10µl/min., the velocity $V_3$ of the plunger is preferably set to a value corresponding to 200—500 µl/min. Also, if the flow rate is set to 1 ml/min., the velocity $V_3$ is preferably set to a value corresponding to 2—3 ml/min. The decrease in the pressure in a time from $t_2$ to $t_4$ is in excess of 0.5 Kg/cm², but this period is quite short and the value 0.5 Kg/cm² is small. Further, once the outlet check valve of the pump opens, the velocity of the plunger returns to the given value. Consequently, even when the solvent is replaced by a different solvent, automatic compressibility compensation is provided, resulting in no change in the flow rate.

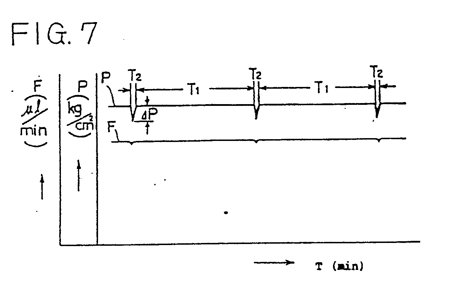

Fig. 7 shows the relation among the pressure P of the pump outlet, flow rate F and time when the delivery flow rate is set to 10 µl/min. The flow rate effectively compensated by the aforementioned procedure ranges from 1 to 3,000 µl/min. When a plunger presently often used and having a capacity of about 100µl per stroke is employed, if the set flow rate exceeds the above range, then the compensating quantity will be insufficient and will cause an error, because the maximum delivery velocity of such a plunger can reach on the order of 10 ml/min. at most. However, the flow rate range defined above is sufficient for practical applications in liquid chromatography and will not pose any problem. Also, in the above example, one stroke time taken by the rapid suction is set to about 1 second for a flow rate of 10 µl/min. and about 0.2 second for a flow rate of 100 µl/min., and it is set to 0.15 second throughout a flow rate range from that value to 9,900 µl/min. for example. In this way the period $t_2 - t_1$ is very short. As an example, if a plunger frequently used and having a capacity of about 100 µl per stroke is employed and if the flow rate is set to 10 µl/min., then the time required for a delivery is about 600 seconds. It is then assumed that $t_2 - t_1 = 1$sec. Then, the quantity of solvent (mobile phase) needed to be supplied into the column during the rapid suction is about 0.17 µl, that can be sufficiently made up by the compressibility of the solvent in the passage as well as by the damper having a quite small capacity. As such, the decrease in the pressure $(P_1 - P_2)$ during rapid suction from $t_2$ to $t_1$ is very small at lower flow rate range thus to introduce substantially no pressure drop.

Unlike the above embodiment, it is possible to store the pressure $P_1$ at the initiation of suction in the memory for driving the plunger at a high velocity until the pressure of the pump outlet reaches the pressure $P_1$ at the beginning of a suction process. In this case, even when the pressure change varies the value of the flow rate slightly, especially if the setting flow rate is large, pulsation can be reduced effectively.

It is to be understood that the present invention is not limited to the foregoing description and the drawings. Note also that the passage for returning the mobile phase to the pump while no sample is injected is not shown. Further as the control circuit for the stepping motor is known and does not constitute the invention per se, it is shown schematically. In addition, the aforesaid motor may be a motor other than a stepping motor.

The solvent delivery device according to the invention will further yield the following advantages.

1) Especially at a low flow rate range from 1 to 1,000 µl/min., even if the pressure varies within the range from 0 to 500 Kg/cm², a constant flow rate can automatically be obtained at all times, irrespective of the kind of solvent used.

2) Especially when the flow rate ranges from several tens of µl/min. to several hundred µl/min. as encountered in a situation where a micro bore column whose inner diameter is roughly less than 1 mm, even if the pressure increases to 500 Kg/cm², for instance, the time during which the delivered flow is accompanied by pulsation can be shortened so as to be negligible in accordance with the novel method. In addition, the variation magnitude can also be reduced. Consequently, it is possible to deliver mobile phase while producing substantially no pulsation within this range. Furthermore, the compressed fluid in the passage from the pump to the column interferes with the pulsation, thereby substantially eliminating the pressure variations in delivering solvent, though it is required, of course, that the content volume of said passage be a given volume.

3) Even when air bubbles enter the pump chamber while the plunger is being retracted, and also when air bubbles are generated in the chamber, the plunger moves fast at the beginning of a delivery stroke until a pressure stored in the memory just prior to the delivery is attained and so the bubbles are compressed rapidly, whereby the bubbles can very readily escape from the chamber even at lower flow rate range where the plunger moves at very low velocities.

## Claims

1. A liquid chromatograph comprising a reciprocating single plunger pump having a pair of check valves respectively disposed on the outlet and inlet sides of the pump; a solvent supply passage through which solvent is supplied from the outlet check valve of the pump to a column; a driver means for causing the plunger of the pump to move for delivering solvent and to move faster for sucking solvent, and a control means for controlling the velocity of the plunger at which the plunger is moved for the delivery or suction; the control means comprising a detecting means disposed in the solvent supply passage for providing a signal corresponding to a physical parameter of the solvent, a means for providing a reference signal at a predetermined point of the pump cycle, and a comparator means for comparing the reference signal with a signal indicating the parameter which is derived from the detecting means: the signal produced from the comparator means allowing the velocity at which the plunger is moved to be controlled, characterized in that it further comprises: pressure detecting means as said detecting means, memory means, adapted for storing a pressure signal obtained from the pressure detecting means at said predetermined point at which the suction is terminated and being associated with said comparator means for comparing the stored pressure signal with a signal indicating a pressure which is derived from said pressure detecting means; and in that said control means further comprises means for controlling, in response to the signal produced from the comparator means, the velocity at which the plunger is moved for delivery from the initiation of the delivery stroke until the outlet pressure of the pump reaches again the pressure as stored at the predetermined point, so that the above velocity is greater than a velocity of the plunger set for the subsequent movement for delivery.

2. A liquid chromatograph as set forth in claim 1, wherein the plunger (9) moves at its maximum velocity for compression of the solvent from the initiation of delivery stroke until the pressure at said predetermined point is reached and then it moves at a velocity between the maximum velocity and said velocity set for delivery flow rate.

3. A liquid chromatograph as set forth in claim 1, wherein the solvent supply passage (8) is provided with a pulsation damper means (5) between the column (7) and the pressure detecting means (4) disposed in the passage (8).

4. A liquid chromatograph as set forth in claim 1, wherein the solvent supply passage (8) is provided with a pulsation damper (5) of a small capacity between the column (7) and the pressure detecting means (4) disposed in the passage (8).

5. A liquid chromatograph as set forth in claim 1, wherein the column (7) has an inner diameter less than 1 mm and the plunger pump (2) can supply solvent at a rate of 10—100 µl/min.

6. A liquid chromatograph as set forth in claim 5, wherein the control means (11) controls the plunger pump (2) so that the plunger (9) moves at its maximum velocity for suction.

7. A liquid chromatograph as set forth in claim 6, wherein it takes 0.1—0.2 seconds for the plunger (9) of the pump (2) to move one stroke of suction at its maximum velocity.

### Patentansprüche

1. Flüssigkeitschromatograph mit einer Pumpe mit einem einzigen hin- und herbewegbaren Kolben und mit einem Paar Rückschlagventile, die an der Ausgangs- bzw. Eingangsseite der Pumpe angeordnet sind;

einem Durchgang zur Förderung von Lösungsmittel, durch den Lösungsmittel vom Ausgangs-Rückschlagventil der Pumpe zu einer Säule gefördert wird;

einem Antrieb, der eine Bewegung des Kolbens der Pumpe zum Fördern von Lösungsmittel und eine schnellere Bewegung zum Ansaugen von Lösungsmittel verursacht; und mit

einer Steuerung für die Geschwindigkeit des Kolbens, mit der der Kolben beim Fördern oder beim Ansaugen bewegt wird;

wobei die Steuerung eine Detektionseinrichtung, die in dem Durchgang zur Förderung von Lösungsmittel angeordnet ist und die ein einem physikalischen Parameter des Lösungsmittels entsprechendes Signal liefert, eine Anordnung zur Erstellung eines Referenzsignals an einem vorbestimmten Punkt des Pumpzyklus, und einen Vergleicher aufweist, der das Referenzsignal mit einem den Parameter charakterisierenden Signal vergleicht, das von der Detektionseinrichtung erstellt ist;

und wobei das vom dem Vergleicher produzierte Signal die Steuerung der Geschwindigkeit erlaubt, mit der der Kolben bewegt wird, gekennzeichnet durch folgende weitere Merkmale:

eine Druckmeßeinrichtung als Detektionseinrichtung;

eine Speicheranordnung zur Speicherung eines von der Druckmeßeinrichtung an dem vorbestimmten Punkt, an dem das Ansaugen beendet ist, erhaltenen Drucksignals, die mit dem Vergleicher verbunden ist zum Vergleich des gespeicherten Drucksignals mit dem den Druck charakterisierenden, von der Druckmeßeinrichtung erzeugten Signal;

wobei die Steuerung eine Einrichtung aufweist, die in Abhängigkeit von dem vom Vergleicher erzeugten Signal die Geschwindigkeit steuert, mit der sich der Kolben zur Förderung vom Beginn des Förderhubs bis zu einem Zeitpunkt bewegt, an dem der Ausgangsdruck der Pumpe den für den vorbestimmten Punkt gespeicherten Druckwert erreicht, so daß diese Geschwindigkeit größer ist als eine Geschwindigkeit, die für die weitere Bewegung des Kolbens zur Förderung eingestellt ist.

2. Flüssigkeitschromatograph nach Anspruch 1, bei dem sich der Kolben (9) mit seiner maximalen Geschwindigkeit zur Kompression des Lösungsmittels vom Beginn des Förderhubs bis zum Erreichen des Drucks an dem vorbestimmten Punkt und anschließend mit einer Geschwindigkeit bewegt, die zwischen der maximalen Geschwindigkeit und der für die Förderflußmenge eingestellten Geschwindigkeit liegt.

3. Flüssigkeitschromatograph nach Anspruch 1, bei dem der Durchgang (8) für die Förderung des Lösungsmittels mit einem Pulsationsdämpfer (5) zwischen der Säule (7) und der in dem Durchgang (8) angeordneten Druckmeßeinrichtung (4) versehen ist.

4. Flüssigkeitschromatograph nach Anspruch 1, bei dem der Durchgang (8) zur Förderung des Lösungsmittels mit einem Pulsationsdämpfer (5) von einer geringen Kapazität zwischen der Säule (7) und der in dem Durchgang (8) angeordneten Druckmeßeinrichtung (4) versehen ist.

5. Flüssigkeitschromatograph nach Anspruch 1, bei dem die Säule (7) einen Innendurchmesser von weniger als 1 mm aufweist und die Kolbenpumpe (2) das Lösungsmittel mit einer Durchflußmenge von 10 bis 100 µl/min. fördern kann.

6. Flüssigkeitschromatograph nach Anspruch 5, bei dem die Steuerung (11) die Kolbenpumpe (2) so steuert, daß der Kolben (9) zum Ansaugen mit seiner maximalen Geschwindigkeit bewegt wird.

7. Flüssigkeitschromatograph nach Anspruch 6, bei dem der Kolben (9) der Pumpe (2) 0,1 bis 0,2 sec. benötigt, um einen Ansaughub bei seiner maximalen Geschwindigkeit durchzuführen.

### Revendications

1. Chromatographe en phase liquide comprenant: une pompe alternative à piston plongeur unique comportant deux clapets disposés respectivement au refoulement et à l'aspiration de la pompe; un passage de distribution de solvant par lequel le solvant est amené du clapet de refoulement de la pompe à une colonne; des moyens d'entraînement pour provoquer le déplacement du piston de la pompe, afin de refouler le solvant, et pour provoquer un déplacement plus rapide du piston afin d'aspirer le solvant; et des moyens de commande pour régler la vitesse du piston, à laquelle le piston est déplacé pour le refoulement ou l'aspiration; les moyens de commande comprenant un détecteur disposé dans le passage de distribution de solvant pour fournir un signal correspondant à un paramètre physique du solvant, des moyens pour fournir un signal de référence à un point prédéterminé du cycle de la pompe, et un comparateur pour comparer le signal de référence avec un signal indiquant le paramètre qui est fourni par le détecteur, le signal fourni par le comparateur permettant de régler la vitesse à laquelle le piston est déplacé; caractérisé en ce qu'il comprend en outre : un détecteur de pression constituant ledit détecteur; des moyens de mémoire, prévus pour emmagasiner un signal de pression obtenu à partir du détecteur de pression audit point prédéterminé auquel l'aspiration est terminée et associés avec ledit comparateur pour comparer le signal de pression en mémoire avec un signal indicatif d'une pression qui est fourni par ledit détecteur de pression; et en ce que les dits moyens de commande comprennent en outre des moyens pour régler, en réponse au signal fourni par le comparateur, la vitesse à laquelle le piston est déplacé pour le refoulement, à partir du début de la course de refoulement et jusqu'à ce que la pression de refoulement de la pompe atteigne à nouveau la pression qui a été emmagasinée au point prédéterminé, de sorte que la vitesse ci-dessus est supérieure à la vitesse du piston fixée pour la poursuite du mouvement de refoulement.

2. Chromatographe en phase liquide suivant la revendication 1, dans lequel le piston (9) se déplace à sa vitesse maximale pour la compression du solvant, à partir du début de la course de refoulement et jusqu'à ce que la pression audit point prédéterminé soit atteinte, et il se déplace ensuite à une vitesse comprise entre la vitesse maximale et ladite vitesse fixée pour le débit de distribution.

3. Chromatographe en phase liquide suivant la revendication 1, dans lequel le passage (8) de distribution de solvant comporte des moyens (5) d'amortissement de pulsation entre la colonne (7) et le détecteur de pression (4) disposé dans le passage (8).

4. Chromatographe en phase liquide suivant la revendication 1, dans lequel le passage (8) de distribution de solvant comporte un amortisseur de pulsation (5) d'une petite capacité entre la colonne (7) et le détecteur de pression (4) disposé dans le passage (8).

5. Chromatographe en phase liquide suivant la revendication 1, dans lequel la colonne (7) a un diamètre intérieur inférieur à 1 mm et la pompe à piston (2) peut refouler le solvant à un débit de 10 à 100 µl/mn.

6. Chromatographe en phase liquide suivant la revendication 5, dans lequel les moyens de commande (11) commandent la pompe à piston (22) de sorte que le piston (9) se déplace à sa vitesse maximale pour l'aspiration.

7. Chromatographe en phase liquide suivant la revendication 6, dans lequel il faut 0,1 à 0,2 s pour que le piston (9) de la pompe (2) effectue une course d'aspiration à sa vitesse maximale.

# F I G 1

# FIG. 2

# FIG. 3

pulse
signal

flow rate
setting
signal

# FIG.4

FIG. 5

FIG. 6

## 0 106 009

# FIG. 7

7